# EUROPÄISCHE PATENTSCHRIFT

(11) **EP 1 142 681 B1**
(45) Veröffentlichungstag und Bekanntmachung des Hinweises auf die Patenterteilung: **20.04.2005**
(21) Anmeldenummer: 01106738.6
(22) Anmeldetag: 17.03.2001
(51) Int. Cl.: B29C 37/04

(54) **Schneidvorrichtung zum Entfernen von ringförmigen Schweisswulsten an Kunststoffrohren**
Cutting device for removing annular welding flash from plastic pipes
Dispositif de coupe pour éliminer les bavures de soudure annulaires de tuyaux en matière plastique

(30) Priorität: 08.04.2000 DE 10017534
(43) Veröffentlichungstag der Anmeldung: 10.10.2001
(73) Patentinhaber: Dommer, Armin, 71254 Ditzingen (DE); Dommer, Dieter, 71254 Ditzingen (DE)
(72) Erfinder: Dommer, Armin, 71254 Ditzingen (DE); Dommer, Dieter, 71254 Ditzingen (DE)
(74) Vertreter: Vetter, Hans, Dipl.-Phys. Dr.

(56) Entgegenhaltungen:
- EP-A- 0 164 985
- EP-A- 0 300 764
- GB-A- 2 145 647
- US-A- 4 083 106

## Beschreibung

Die Erfindung betrifft eine Schneidvorrichtung zum Entfernen von ringförmigen Schweißwulsten an der Außenseite von miteinander verschweißten Kunststoffrohren gemäß dem Oberbegriff des Anspruchs 1.

Eine derartige, aus der US-A-4 083 106 bekannte Schneidvorrichtung besteht im wesentlichen aus zwei spitzwinkelig miteinander verbundenen Stabelementen, die dadurch radial sehr weit von der Rohroberfläche abstehen, an die sie zum Schneiden angelegt werden. Die zu verschweißenden Rohre werden beim Schweißvorgang und danach bis zur vollständigen Abkühlung in einer Spannvorrichtung gehalten. Diese besitzt axiale Halte- bzw. Betätigungsstangen. Aus diesem Grunde kann die Schweißwulst mit der bekannten Schneidvorrichtung erst nach dem abnehmen der Halte- bzw. Spannvorrichtung für die Rohre weggeschnitten werden.

Weiterhin sind aus der EP-A-0 300 764 und GB-A-2 145 647 Schneidvorrichtungen bekannten, die zum Entfernen der Schweißwulst um das Rohr herumgespannt werden. Daher muss auch bei diesen Schneidvorrichtungen die Halte- bzw. Spannvorrichtung an den Rohren erst entfernt werden, bevor die Schneidvorrichtung um das Rohr herumgespannt werden kann. Auch zu weit radial abstehende Betätigungselemente verhindern die Verwendung dieser Schneidvorrichtungen im eingespannten Zustand der verschweißten Rohre.

Bei einer aus der EP 0 164 985 B1 bekannten Schneidvorrichtung wird der durch das Schneidmesser abgetrennte Schweißwulst mittels eines durch eine Rätsche angetriebenen Zahnrads über eine Schrägfläche nach außen gezogen, wodurch zum einen das Schneidmessergehäuse gegen die Rohraußenfläche gedrückt und gleichzeitig dieses Gehäuse und damit das Schneidmesser weiterbewegt wird. Nachteilig an der bekannten Schneidvorrichtung ist zum einen die aufwendige und eine relativ große Breite und Höhe beanspruchende Vorrichtung und zum ändern besteht die Gefahr, dass der abgetrennte Schweißwulst reißt und durch die Weiterbewegung durch die Rätsche nicht mehr möglich ist.

Eine Aufgabe der vorliegenden Erfindung besteht darin, eine einfachere und kostengünstigere Schneidvorrichtung bei kleinerer, insbesondere schmalerer Bauweise zu schaffen, die die Entfernung des Schweißwulstes noch in eingespannte Zustand der verschweißten Rohre ermöglicht.

Diese Aufgabe wird erfindungsgemäß durch eine Schneidvorrichtung mit den Merkmalen des Anspruches 1 gelöst.

Der Vorteil der erfindungsgemäßen Schneidvorrichtung besteht insbesondere darin, dass eine so niedrige Bauweise erreicht wird, dass sogar Querverbindungselemente zwischen den Spannringen, wie Zugstangen für den Spannantrieb unterfahren werden. Dadurch kann die Schweißwulst bereits im eingespannten Zustand der verschweißten Rohre entfernt werden, also z.B. noch während der Abkühlphase, in der ein Ausspannen nicht möglich ist. Die ohnehin vorhandene Wartezeit während der Abkühlphase kann dadurch sinnvoll zur Entfernung des Schweißwulstes genutzt werden, wobei dieser darüberhinaus im noch warmen Zustand leichter abgetrennt werden kann. Die Breite der Schneidvorrichtung ist dabei lediglich durch die Breite der Gleitvorrichtung bzw. die Breite des Schneidkopfes bestimmt, so dass die Gesamtbreite der Schneidvorrichtung nur unwesentlich dieder Schweißwulst übertrifft. Ein komplizierter und aufwendiger Vorschubantrieb durch Ziehen des Schweißwulstes entfällt dabei völlig, wobei in einfacher Weise am Führungsbügel in Schweißrichtung gezogen wird. In Folge des großen Winkelabstandes zwischen Schneidkopf und Gleitvorrichtung drückt sich der Schneidkopf und damit das Schneidmesser automatisch gegen den Schweißwulst und schneidet automatisch ein, ohne dass ein Druck von außen erforderlich wäre. Die Schneidtiefe bis zur Außenfläche der miteinander verschweißten Kunststoffrohre wird automatisch durch die Abstütz- und Gleitflächen zu beiden Seiten des Schneidmessers erreicht. Auch durch den Wegfall eines Antriebs kann eine solche Schneidvorrichtung so schmal und niedrig gebaut werden, dass sie bei noch eingespannten Kunststoffrohren bereits in der Abkühlphase nach dem Schweißvorgang den Schweißwulst entfernen kann, indem sie zwischen den Spannringen zu beiden Seiten der Schweißnaht um die Rohranordnung herum gezogen wird.

Die manuelle Zugvorrichtung ist als Zughebel ausgebildet, wobei an verschiedenen Stellen des Führungsbügels Steckausnehmungen zur Aufnahme bzw. zum Einstecken des Zughebels vorgesehen sind. Bei einer Bewegung der Schneidvorrichtung und der Querstreben, wie Zugstangen, hindurch kann der Zughebel bei Erreichen einer solchen Querstrebe in einfacher Weise herausgezogen und zur Weiterführung der Schneidbewegung in eine andere Steckausnehmung eingesteckt werden.

Durch die in den Unteransprüchen aufgeführten Maßnahmen sind vorteilhafte Weiterbildungen und Verbesserungen der im Anspruch 1 angegebenen Schneidvorrichtung möglich.

Eine noch bessere Wirkungsweise der erfindungsgemäßen Schneidvorrichtung kann bei einem Winkelabstand zwischen Schneidkopf und Gleitvorrichtung von wenigstens 90°, vorzugsweise zwischen 100 und 130° erreicht werden. Bei einem solchen Winkel erhöht sich noch die beim Ziehen des Führungsbügels automatisch auftretende, den Schneidkopf gegen die Rohranordnung drückende Anlagekraft, so dass durch einfaches Ziehen des Führungsbügels entlang der Schweißwulst ein einfaches und sicheres Abtrennen derselben erfolgt und die Schneidvorrichtung sicher entlang der Schweißwulst automatisch geführt wird.

Die Gleitvorrichtung liegt in der Arbeitsposition in vorteilhafter Weise zu beiden Seiten des Schweißwulstes an der Rohraußenfläche an, so dass auch die Gleitvorrichtung automatisch durch und entlang des Schweißwulstes geführt wird. Dabei besteht die Gleitvorrichtung in vorteilhafter Weise aus zwei drehbar am Führungsbügel angeordneten Rollen, durch die die Schneidvorrichtung besonders leicht geführt werden kann.

Um eine Anpassung an verschiedene Rohrdurchmesser zu ermöglichen, ist der Winkelabstand zwischen Schneidkopf und Gleitvorrichtung in vorteilhafter Weise einstellbar. In einer vorteilhaften Ausgestaltung besitzt dabei der Führungsbügel wenigstens zwei aneinander verschiebbare und in verschiedenen Positionen fixierbare Bereiche.

Zu dieser Einstellung des Winkelabstands dient in vorteilhafter Weise eine einzige Feststellschraube, wobei zur Verstellung lediglich die beiden aneinander verschiebbaren Bereiche relativ zueinander verschoben werden müssen. Die Fixierung in der gewünschten Position bei gewünschtem Winkelabstand erfolgt in einfacher Weise durch diese Feststellschraube. Hierdurch kann eine Anpassung an verschiedene Rohrdurchmesser mit Hilfe nur einer einzigen Feststellschraube realisiert werden.

Um eine noch engere Führung der Schneidvorrichtung entlang dem Außenumfang der Rohranordnung zu ermöglichen, besitzt der Führungsbügel an seiner in der Arbeitsposition zum Schweißwulst hinweisenden Seite Ausnehmungen zur Aufnahme der Schweißwulste.

Der stabförmige Zughebel ist vorzugsweise im eingesteckten Zustand in der Arbeitsposition im Wesentlichen radial zur zu bearbeitenden Rohranordnung ausgerichtet.

Das Schneidmesser ist zweckmäßigerweise zur Tangente an der Kontaktstelle der Schneidvorrichtung an der Rohranordnung hin geneigt, um das automatische Einschneiden zu optimieren.

Ein Ausführungsbeispiel der Erfindung ist in der Zeichnung dargestellt und in der nachfolgenden Beschreibung näher erläutert. Es zeigen:
- Figur 1: ein Ausführungsbeispiel der erfindungsgemäßen Schneidvorrichtung in einer Seitenansicht, einmal an ein Rohr mit kleinerem und einmal an ein Rohr mit größerem Durchmesser angelegt,
- Figur 2: eine Stirnansicht des Schneidkopfes,
- Figur 3: eine Draufsicht auf den verstellbaren Bereich der Schneidvorrichtung und
- Figur 4: eine Ansicht zweier miteinander verschweißter Kunststoffrohre nach dem Schweißvorgang im noch eingespannten Zustand.

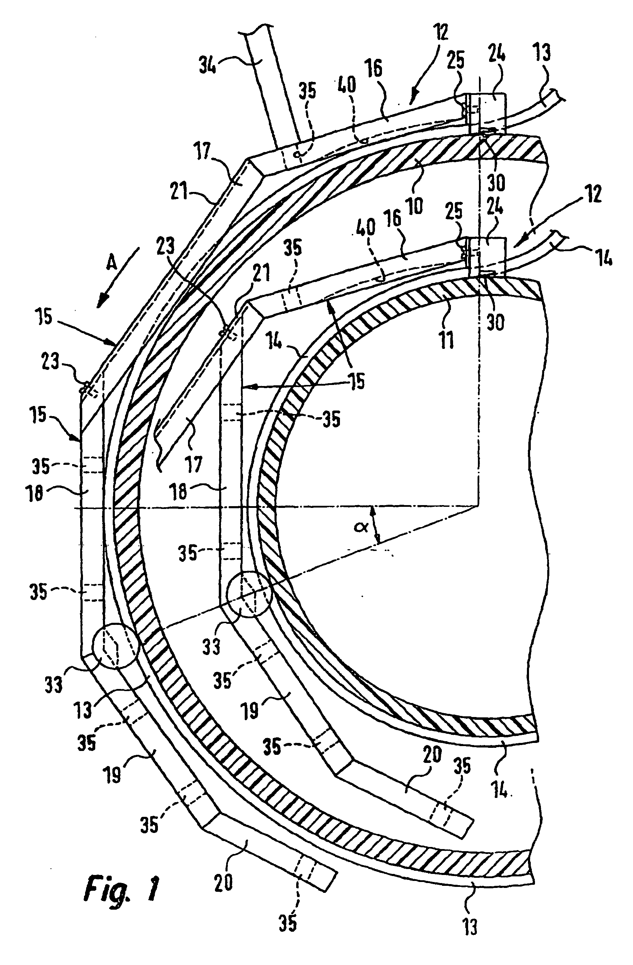

In Figur 1 ist eine äußere aus zwei miteinander verschweißten Rohren bestehende Rohranordnung 10 mit einem Durchmesser von beispielsweise 450 mm und eine ebenfalls aus zwei miteinander verschweißten Rohren bestehende innere Rohranordnung 11 mit kleinerem Durchmesser von beispielsweise 280 mm dargestellt. Diese Darstellung diente lediglich der Erläuterung von Winkelabständen in Verbindung mit der Verstellbarkeit der als Ausführungsbeispiel dargestellten Schneidvorrichtung 12, während in der Realität eine derartige Anordnung ineinander kaum vorkommen dürfte.

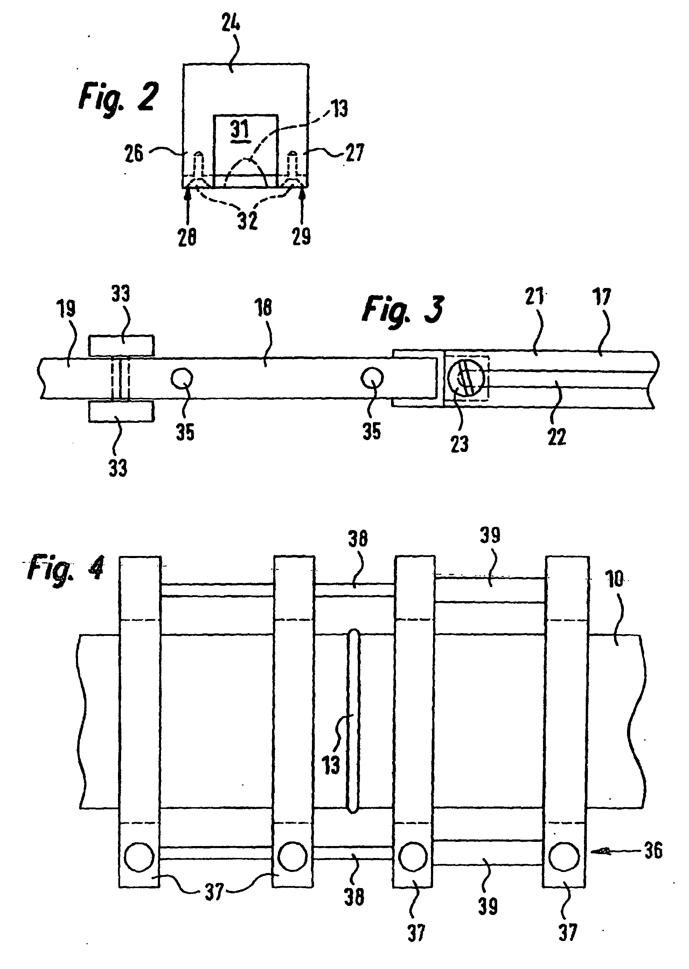

Die beiden im Schnitt dargestellten Rohranordnungen 10, 11 weisen jeweils einen Schweißwulst 13, 14 an der Verbindungsstelle der miteinander verschweißten Kunststoffrohre auf, wie dies beispielsweise in Figur 4 deutlicher erkennbar ist. Solche Schweißwulste müssen für verschiedene Anwendungen an der Außenseite der Rohre entfernt werden, um eine glatte Außenfläche zu erreichen. Derartige Schweißwulste entstehen auch an der Rohrinnenseite und müssen dort bei verschiedenen Anwendungen entfernt werden. Hierzu dient beispielsweise eine Schneidvorrichtung gemäß der DE 195 10 480 A.

Die als Ausführungsbeispiel dargestellte Schneidvorrichtung 12 besteht aus einem bogenförmigen Führungsbügel 15, der aus mehreren über Knickstellen miteinander verbundenen Segmenten 16 bis 20 besteht. Die Segmente 16 bis 20 und die Knickstellen sind so ausgebildet, dass der Führungsbügel 15 im Wesentlichen an die Außenkrümmung der Rohranordnung 10 angepasst ist. Prinzipiell können an Stelle von über Knickstellen verbundenen Segmente auch ein bogenartig gekrümmter Führungsbügel 15 treten.

Die Segmente 17 und 18 sind ineinander verschiebbar so ausgebildet, dass der Knickwinkel bei der Verschiebung oder Verstellung erhalten bleibt. Dies ist selbstverständlich nicht zwingend. Hierzu besitzt das Segment 17 ein U-förmiges Profil, in das ein Endbereich des Segments 18 eingreift und an der Verbindungswandung 21 des U-Profils des Segments 17 anliegt. Diese Verbindungswandung 21 besitzt gemäß der in Figur 3 dargestellten Draufsicht einen Längsschlitz 22, durch die eine Feststellschraube 23 durchgreift, so dass nach Lösen dieser Feststellschraube 23 eine Verschiebung des Endbereichs des Segments 18 im Segment 17 möglich ist. An der äußeren Rohranordnung 10 ist die Endposition für den großen Durchmesser und an der inneren Rohranordnung 11 nahezu die entgegengesetzte Endposition für den kleinsten Rohrdurchmesser dargestellt. Falls der Führungsbügel 15 aus zwei gekrümmten Segmenten besteht, so muss ebenfalls eine entsprechende Verstellung realisiert sein.

An der Endstirnseite des in Arbeitsrichtung A letzten Segments 16 ist ein Schneidkopf 24 mittels Halteschrauben 25 lösbar fixiert. Er kann selbstverständlich prinzipiell auch unlösbar fixiert sein, beispielsweise durch eine Schweiß-, Niet- oder Klebeverbindung. Der Schneidkopf 24 besitzt gemäß der in Figur 2 dargestellten Queransicht ein U-förmiges Profil, so dass der zu entfernende Schweißwulst 13 bzw. 14 umgriffen wird und die beiden Schenkel 26, 27 des U-förmigen Schneidkopfes 24 zu beiden Seiten der Schweißwulst 13 bzw. 14 an der Außenfläche der Rohranordnung 10 bzw. 11 in der Arbeitsposition anliegen. Die freien Endflächen der Schenkel 26, 27 dienen somit als Gleitflächen 28, 29 und verhindern, dass ein die beiden Schenkel 26, 27 in der Ebene der Gleitflächen 28, 29 verbindendes Schneidmesser 30 zu tief einschneidet, d.h. maximal bis zur Außenfläche der Rohranordnung 10 bzw. 11. Das blättchenförmige Schneidmesser 30 ist in die Schenkel 26, 27 eingelassen und leicht derart schräggestellt, dass es bei einer Bewegung der Schneidvorrichtung 12 in der Arbeitsrichtung von selbst automatisch in die Schweißwulst 13 bzw. 14 einschneidet. Beim Schneidvorgang wird der abgetrennte Schweißwulst 13, 14 entlang einer Schrägfläche des Schneidmessers 30 durch einen Durchgang 31 des U-förmigen Schneidkopfes 24 hindurch von der Rohranordnung 10 bzw. 11 weggeführt, wie dies in Figur 1 dargestellt ist.

Das Schneidmesser 30 ist mittels Halteschrauben 32 in einer entsprechenden Querausnehmung der Schenkel 26, 27 im Bereich der Gleitflächen 28, 29 lösbar und auswechselbar gehalten.

In einem Winkelabstand von 110° (90° + α) vom Schneidkopf 24 bzw. von der Schneidkante des Schneidmessers 30 ist eine aus zwei Rollen 33 bestehende Gleitvorrichtung am Führungsbügel 15 drehbar gelagert, im Ausführungsbeispiel an der Knickstelle zwischen den Segmenten 18 und 19. Die beiden Rollen 33 rollen bei der Arbeitsbewegung zu beiden Seiten der Schweißwulst 13 bzw. 14 an der Außenfläche der Rohranordnung 10 bzw. 11 ab, so dass eine Längsführung entlang der Schweißwulst 13 bzw. 14 gewährleistet ist. Durch Verstellen des Führungsbügels 15 mittels der Segmente 17, 18 in der beschriebenen Weise kann dieser Winkelabstand auch bei Rohren mit unterschiedlichem Durchmesser eingestellt werden, wie dies Figur 1 zeigt. Durch den 90° überschreitenden Winkelabstand tritt beim Ziehen der Schneidvorrichtung 12 in der Arbeitsrichtung am Schneidkopf 24 eine zur Rohranordnung 10 bzw. 11 hin gerichtete Kraft auf, die den Schneidkopf 24 automatisch und sicher an der jeweiligen Rohranordnung 10 bzw. 11 während der Bewegung hält. Ein Winkel von 110° hat sich als besonders günstig herausgestellt, wobei auch andere Winkel zwischen 90 und 180° gute Ergebnisse bringen. Bei einer verschlechterten Ausführungsform sind prinzipiell auch kleinere Winkel als 90° möglich, jedoch sollten 70° nicht unterschritten werden, da sonst ein unabsichtliches Ablösen des Schneidkopfes 24 möglich ist.

Zum Bewegen bzw. Ziehen der Schneidvorrichtung 12 in der Arbeitsrichtung dient als Zugvorrichtung ein stabförmiger Zughebel 34, der in verschiedene Steckausnehmungen 35 entlang des Führungsbügels 15 wahlweise einsteckbar und leicht wieder herausnehmbar ist. Hierdurch kann der Schweißwulst 13 bei nach dem Schweißvorgang noch eingespannten Rohren der Rohranordnung 10 entfernt werden. Eine beispielsweise aus der EP 0 793 572 B1 bekannte Rohrspanneinrichtung 36 besitzt vier Spannringe 37, von denen je zwei an einem Endbereich der beiden zu verschweißenden Rohre der Rohranordnung 10 fixiert werden. Die beiden benachbart an der Schweißwulst 13 angeordneten Spannringe 37 besitzen einen relativ kleinen Abstand voneinander, jedoch kann die Schneidvorrichtung 12 (siehe z.B. Figur 3) so schmal gebaut werden, dass sie zwischen diesen Spannringen 37 zur Entfernung der Schweißwulst 13 bewegbar ist. Die Spannringe sind im dargestellten eingespannten Zustand der Rohranordnung 10 noch über Betätigungsstangen 38 von Stellgliedern 39 miteinander verbunden. Trotz relativ kleinem Abstand zwischen den Betätigungsstangen 38 und der Rohraußenfläche kann die relativ niedrige und an die Außenkrümmung der Rohranordnung 10 angepasste Schneidvorrichtung 12 unter diesen Betätigungsstangen 38 hindurchgezogen werden. Dies wird nicht zuletzt durch die Umsteckbarkeit des Zughebels 34 ermöglicht. Wenn dieser beim Ziehen in der Arbeitsrichtung A an eine Betätigungsstange 38 oder ein sonstiges Querhindernis ankommt, so wird er herausgezogen und in eine andere Ausnehmung 35 eingesteckt, wodurch eine Weiterbewegung in der Arbeitsrichtung A praktisch beliebig möglich ist.

In Abwandlung des dargestellten Ausführungsbeispiels kann der Führungsbügel 15 auch mehrere Verstellmöglichkeiten besitzen, um eine noch bessere Anpassung an die jeweilige Rohrkrümmung zu erreichen. Weiterhin können alternativ oder zusätzlich auch die Positionen des Schneidkopfes 24 und/oder der Rollen 33 verstellt werden. Beim dargestellten Ausführungsbeispiel können auch beispielsweise die Segmente 19 und 20 entfallen.

Damit der Führungsbügel 15 möglichst eng entlang der Außenkrümmung der Rohranordnung 10 bzw. 11 geführt werden kann, besitzt das Segment 16 an der in der Arbeitsposition zur Rohraußenfläche hinweisenden Seite eine den Schweißwulst 13 aufnehmende Ausnehmung 40. Dies ist bei ohnehin U-förmigen Segment 17 nicht erforderlich. Bei Bedarf können auch die übrigen Segmente 18 bis 20 derartige Ausnehmungen besitzen.

## Patentansprüche

1. Schneidvorrichtung zum Entfernen von ringförmigen Schweißwulsten an der Außenseite von miteinander verschweißten Kunststoffrohren, mit einem entlang eines zu entfernenden Schweißwulstes (13; 14) führbaren Schneidkopf (24), der zwei in der Arbeitsposition zu beiden Seiten des Schweißwulstes (13; 14) an der Rohraußenfläche anliegende Abstütz- und Gleitflächen (28,29) sowie ein in der Ebene der Gleitflächen (28, 29) angeordnetes Schneidmesser (30) besitzt, wobei der Schneidkopf (24) an einem Endbereich eines in der Arbeitsposition den Schweißwulst (13; 14) in der Umfangsrichtung über einen Winkel von wenigstens 70° übergreifenden Führungsbügels (15) angeordnet ist, und wobei eine manuelle Zugvorrichtung (34) am Führungsbügel (15) lösbar vorgesehen ist, **dadurch gekennzeichnet, dass** eine Gleitvorrichtung (33) am Führungsbügel (15) in einem Winkelabstand zum Schneidkopf (24) von wenigstens 70° angeordnet ist, dass der Führungsbügel (15) durch eine entsprechende Krümmung oder ein- oder mehrfache Abknickungen an die Außenkrümmung der jeweils zu bearbeitenden Rohranordnung (10; 11) angepasst ist, wobei die Anpassung für einen bestimmten Rohrdurchmesser oder für einen Rohrdurchmesserbereich erfolgt, dass die manuelle Zugvorrichtung (34) als Zughebel ausgebildet ist und dass an verschiedenen Stellen des Führungsbügels (15) Steckausnehmungen (35) zur Aufnahme des Zughebels vorgesehen sind.

2. Schneidvorrichtung nach Anspruch 1, **dadurch gekennzeichnet, dass** der Winkelabstand zwischen Schneidkopf (24) und Gleitvorrichtung (33) wenigstens 90°, vorzugsweise zwischen 100° und 130° beträgt.

3. Schneidvorrichtung nach Anspruch 1 oder 2, **dadurch gekennzeichnet, dass** die Gleitvorrichtung (33) in der Arbeitsposition zu beiden Seiten des Schweißwulstes (13; 14) an der Rohraußenfläche anliegt.

4. Schneidvorrichtung nach Anspruch 3, **dadurch gekennzeichnet, dass** die Gleitvorrichtung aus zwei drehbar am Führungsbügel (15) angeordneten Rollen besteht.

5. Schneidvorrichtung nach einem der vorhergehenden Ansprüche, **dadurch gekennzeichnet, dass** der Winkelabstand zwischen Schneidkopf (24) und Gleitvorrichtung (33) zur Anpassung an verschiedene Rohrdurchmesser einstellbar ist.

6. Schneidvorrichtung nach Anspruch 5, **dadurch gekennzeichnet, dass** der Führungsbügel (15) wenigstens zwei aneinander verschiebbare und in verschiedenen Positionen fixierbare Bereiche (17, 18) besitzt.

7. Schneidvorrichtung nach Anspruch 6, **dadurch gekennzeichnet, dass** zur Verstellung des Winkelabstands durch die beiden aneinander verschiebbaren Bereiche (17, 18) eine einzige Feststellschraube (23) vorgesehen ist.

8. Schneidvorrichtung nach einem der vorhergehenden Ansprüche, **dadurch gekennzeichnet, dass** der Führungsbügel (15) an seiner in der Arbeitsposition zum Schweißwulst (13;14) weisenden Seite Ausnehmungen (40) zur Aufnahme des Schweißwulstes (13; 14) besitzt.

9. Schneidvorrichtung nach eine der vorhergehenden Ansprüche, **dadurch gekennzeichnet, dass** die als stabförmiger Zughebel ausgebildete Zugvorrichtung (34) im eingesteckten Zustand in der Arbeitsposition im Wesentlichen radial zur zu bearbeitenden Rohranordnung (10; 11) ausgerichtet ist.

10. Schneidvorrichtung nach einem der vorhergehenden Ansprüche, **dadurch gekennzeichnet, dass** das Schneidmesser (30) zur Tangente an der Kontaktstelle mit der Rohranordnung hin geneigt ist.

## Claims

1. Cutting device for the removal of annular weld flash form the outside of plastic pipes welded together, with a cutting head (24) guidable along a weld flash (13; 14) to be removed and having two support and sliding surfaces (28, 29) fitting up in the operating position against the pipe exterior on either side of the weld flash (13; 14), together with a cutter (30) mounted in the plane of the sliding surfaces (28, 29), wherein the cutting head (24) is mounted on an end section of a guide fork (15) overlapping the weld flash (13; 14) in the operating position over an angle of at least 70°, and wherein a manual pulling device (34) is releasably provided on the guide fork (15), **characterised in that** a sliding device (33) is provided on the guide fork (15) at an angular distance from the cutting head (24) of at least 70°, that the guide fork (15) is adapted to the external curvature of the respective pipe assembly (10;11) to be machined by means of suitable curving or by bending one or more times, wherein the adaptation for a particular pipe diameter or pipe diameter range is effected by providing that the manual pulling device (34) is in the form of a pull lever and that sockets (35) to hold the pull lever are provided at various points on the guide fork (15).

2. Cutting device according to claim 1, **characterised in that** the angular distance between cutting head (24) and sliding device (33) is at least 90°, preferably between 100° and 130°.

3. Cutting device according to claim 1 or 2, **characterised in that** the sliding device (33) fits up against the pipe exterior at both sides of the weld flash (13; 14) in the operating position.

4. Cutting device according to claim 3, **characterised in that** the sliding device is comprised of two rollers rotatably mounted on the guide fork (15).

5. Cutting device according to any of the preceding claims, **characterised in that** the angular distance between cutting head (24) and sliding device (33) is adjustable, for adaptation to different pipe diameters.

6. Cutting device according to claim 5, **characterised in that** the guide fork (15) has two or more areas (17, 18) which may be pushed together and fixed in various positions.

7. Cutting device according to claim 6, **characterised in that** a single adjusting screw (23) is provided to adjust the angular distance by means of the two areas (17, 18) which may be pushed together.

8. Cutting device according to any of the preceding claims, **characterised in that** the guide fork (15) has on that side of it facing the weld flash (13; 14) in the operating position, recesses (40) for holding the weld flash ( 13; 14).

9. Cutting device according to any of the preceding claims, **characterised in that** in the inserted state, the pulling device (34) in the form of a rod-shaped pull lever, is aligned substantially radially to the pipe assembly (10; 11) to be machined, in the operating position.

10. Cutting device according to any of the preceding claims, **characterised in that** the cutter (30) is inclined at a tangent at the point of contact with the pipe assembly.

## Revendications

1. Dispositif de coupe pour éliminer les bavures de soudures annulaires sur la face extérieure de tuyaux en matière plastique soudés les uns aux autres, avec une tête de coupe (24) pouvant être guidée le long d'une bavure de soudure à éliminer (13 ; 14) qui possède deux surfaces de support et de glissement (28, 29) en contact avec la surface extérieure des tuyaux des deux côtés de la bavure de soudure (13 ; 14) dans la position de travail ainsi qu'un couteau (30) disposé dans le plan des surfaces de glissement (28, 29), la tête de coupe (24) étant disposée sur une zone d'extrémité d'un étrier de guidage (15) recouvrant la bavure de soudure (13 ; 14) dans le sens de la circonférence sur un angle d'au moins 70° dans la position de travail et un dispositif de traction manuel (34) amovible étant prévu sur l'étrier de guidage (15), **caractérisé en ce qu'**un dispositif de glissement (33) est disposé sur l'étrier de guidage (15) avec un écart angulaire d'au moins 70° par rapport à la tête de coupe (24), **en ce que** l'étrier de guidage (15) est adapté à la courbure extérieure de la disposition de tuyaux (10 ; 11) respective à usiner grâce à une courbure correspondante ou bien à une ou plusieurs pliures de la courbure extérieure, l'adaptation étant effectuée pour un diamètre de tuyaux déterminé ou pour une plage de diamètres de tuyaux, **en ce que** le dispositif de traction manuel (34) est réalisé sous forme de levier de traction et **en ce que**, à différents endroits de l'étrier de guidage (15), des évidements d'insertion (35) sont prévus pour l'accueil du levier de traction.

2. Dispositif de coupe selon la revendication 1, **caractérisé en ce que** l'écart angulaire entre la tête de coupe (24) et le dispositif de glissement (33) est d'au moins 90°, de préférence compris entre 100° et 130°.

3. Dispositif de coupe selon la revendication 1 ou 2, **caractérisé en ce que**, dans la position de travail, le dispositif de glissement (33) est en contact avec la surface extérieure des tuyaux des deux côtés de la bavure de soudure (13 ; 14).

4. Dispositif de coupe selon la revendication 3, **caractérisé en ce que** le dispositif de glissement est composé de deux galets disposés sur l'étrier de guidage (15) de manière à pouvoir tourner.

5. Dispositif de coupe selon l'une des revendications précédentes, **caractérisé en ce que** l'écart angulaire entre la tête de coupe (24) et le dispositif de glissement (33) est réglable afin de permettre une adaptation à différents diamètres de tuyaux.

6. Dispositif de coupe selon la revendication 5, **caractérisé en ce que** l'étrier de guidage (15) possède au moins deux zones (17, 18) pouvant être déplacées l'une contre l'autre et fixées dans différentes positions.

7. Dispositif de coupe selon la revendication 6, **caractérisé en ce que** pour modifier le réglage de l'écart angulaire grâce aux deux zones (17, 18) pouvant être déplacées l'une contre l'autre, une seule vis de blocage (23) est prévue.

8. Dispositif de coupe selon l'une des revendications précédentes, **caractérisé en ce que**, dans la position de travail, l'étrier de guidage (15) possède sur son côté dirigé vers la bavure de soudure (13 ; 14) des évidements (40) pour accueillir la bavure de soudure (13 ; 14).

9. Dispositif de coupe selon l'une des revendications précédentes, **caractérisé en ce que**, lorsqu'il est inséré dans la position de travail, le dispositif de traction (34) réalisé comme levier de traction en forme de tige est pour l'essentiel orienté radialement par rapport à la disposition de tuyaux (10 ; 11) à usiner.

10. Dispositif de coupe selon l'une des revendications précédentes, **caractérisé en ce que** le couteau (30) est incliné vers la tangente au point de contact avec la disposition de tuyaux.
